# EUROPÄISCHE PATENTSCHRIFT

(11) **EP 4 408 710 B1**
(45) Veröffentlichungstag und Bekanntmachung des Hinweises auf die Patenterteilung: **11.11.2026**
(21) Anmeldenummer: 22777962.6
(22) Anmeldetag: 09.09.2022
(51) Int. Cl.: B60S 1/48

(54) **VERTEILUNGSEINRICHTUNG, FLÜSSIGKEITSVERTEILUNGSAKTUATOR, REINIGUNGSVORRICHTUNG, FAHRZEUG UND VERFAHREN ZUM BETRIEB EINER REINIGUNGSVORRICHTUNG**
DISTRIBUTION DEVICE, LIQUID DISTRIBUTION ACTUATOR, CLEANING DEVICE, VEHICLE AND METHOD OF OPERATING A CLEANING DEVICE
DISPOSITIF DE DISTRIBUTION, ACTIONNEUR DE DISTRIBUTION DE LIQUIDE, DISPOSITIF DE NETTOYAGE, VÉHICULE ET PROCÉDÉ DE FONCTIONNEMENT D'UN DISPOSITIF DE NETTOYAGE

(30) Priorität: 29.09.2021 DE 102021210900
(43) Veröffentlichungstag der Anmeldung: 07.08.2024
(73) Patentinhaber: Schaeffler Technologies AG & Co. KG, 91074 Herzogenaurach (DE)
(72) Erfinder: MÜLLER, Marius, 80687 München (DE); MAGUIN, Georges, 80687 München (DE); BART, Konstantin, 80687 München (DE); HEEGER, Christof, 80687 München (DE)
(74) Vertreter: Schaeffler Technologies
(86) Internationale Anmeldenummer: PCT/EP2022/075050
(87) Internationale Veröffentlichungsnummer: WO 2023/052078

(56) Entgegenhaltungen:
- EP-A1- 3 153 361
- DE-A1- 102016 120 641
- DE-A1- 102016 218 331
- DE-A1- 102020 202 570
- DE-T5- 112016 005 328

## Beschreibung

Die Erfindung betrifft eine Verteilungseinrichtung für einen Flüssigkeitsverteilungsaktuator, einen Flüssigkeitsverteilungsaktuator mit einer solchen Verteilungseinrichtung, eine Reinigungsvorrichtung für ein Fahrzeug mit einem solchen Flüssigkeitsverteilungsaktuator, ein Fahrzeug mit einer solchen Reinigungsvorrichtung sowie ein Verfahren zum Betrieb einer solchen Reinigungsvorrichtung.

Eine der Erfindung zugrunde liegende Aufgabe ist es, eine Wasserverteilung für eine Fahrzeugreinigung zu verbessern, und zwar im Hinblick auf die zunehmende Zahl von Fahrzeugsensoren.

Aus dem Stand der Technik sind artverwandte Vorrichtungen bekannt. So offenbart die DE 10 2016 218 331 A1 eine Waschwasserdosiervorrichtung zum Zwecke der Reinigung verschiedenster an einem Kraftfahrzeug vorgesehener Sensoren, Kameramittel oder anderer für ein automatisiertes oder hochautomatisiertes erforderlicher Komponenten. Die Waschwasserdosiervorrichtung ist zur dosierten Abgabe von Waschwasser, mit einer an einem Verteilermittel anschließbaren Waschwasser-Eingangsleitung und einer Mehrzahl von an dem Verteilermittel anschließbaren Waschwasser-Ausgangsleitungen vorgesehen, die eingerichtet sind, mit einer Mehrzahl von Waschwasser-Ausgabemitteln in fluidischer Verbindung zu stehen, wobei das Verteilermittel dazu eingerichtet ist, das an der Waschwasser-Eingangsleitung anstehende Waschwasser wahlweise an eine, mehrere oder alle Waschwasser-Ausgangsleitungen zu leiten.

Diese Aufgabe wird durch eine gemäß Anspruch 1 vorgeschlagene und unter Schutz gestellte Verteilungseinrichtung gelöst. Es werden ferner ein Flüssigkeitsverteilungsaktuator, eine Reinigungsvorrichtung, ein Fahrzeug sowie ein Verfahren zum Betrieb der Reinigungsvorrichtung vorgeschlagen und unter Schutz gestellt (vgl. Ansprüche 6, 7, 8 und 9). Vorteilhafte Ausführungsformen der Erfindung sind Gegenstand der Unteransprüche.

Es wird eine Verteilungseinrichtung - bzw. Distributionseinrichtung - zur Versorgung einzelner Reinigungsstellen eines Fahrzeugs mit einer druckbeaufschlagten Flüssigkeit vorgeschlagen.

Die Verteilungseinrichtung definiert dabei einzelne Positionen, in welche ein Verteiler wahlweise relativ zu einem Gehäuse, in welchem er angeordnet und antreibbar ist, verstellbar ist, und zwar in:
- einzelne Verteilungspositionen, in welchen der Verteiler einen flüssigkeitsdruckbeaufschlagten Zulaufanschluss der Verteilungseinrichtung mit einem von mehreren Ablaufanschlüssen der Verteilungseinrichtung fluidisch verbindet,
- eine Bypassposition, in welcher der Verteiler einen Bypass zur Unterbindung eines Ablaufs der Flüssigkeit hin zu einer der Reinigungsstellen und zur Rückführung der Flüssigkeit zu einem Tank ausbildet, aus welchem die Flüssigkeit förderbar ist,
- oder eine Absperrposition, welche sowohl den Ablauf als auch die Rückführung unterbindet,
   wobei die Verteilungseinrichtung für einen Flüssigkeitsrücklauf in den Tank ausgebildet ist.

Dieser vorgeschlagene Wasserverteilungsmechanismus vereinfacht eine Fahrzeugreinigungsvorrichtung bzw. ein Fahrzeugreinigungssystem und reduziert somit die damit verbundenen Kosten, weil sich durch ihn Flüssigkeitsförderpumpen einsparen lassen. Folglich geht damit auch eine Gewichtsersparnis einher.

Zudem reduziert dieser vorgeschlagene Wasserverteilungsmechanismus einen Reinigungsflüssigkeitsverbrauch. Und dies wiederum äußert sich in einer Erhöhung einer Reichweite eines Fahrzeugs, die sich als solche mit einer Befüllung eines Reinigungsflüssigkeitsbehälters bzw. Tanks erreichen lässt. Insbesondere gilt dies für zukünftig vollautonom fahrende Fahrzeuge, die gegenüber bisherigen Fahrzeugen eine signifikant höhere Anzahl an Sensoren - einschließlich sicherheitsrelevanter Sensoren - aufweisen werden und deren Funktionsfähigkeit sichergestellt werden muss.

Ferner begünstigt die Einsparung von erforderlichen Vorrichtungs- bzw. Systemkomponenten auch eine entsprechende Kompaktheit einer solchen Vorrichtung bzw. eines solchen Systems, so dass insgesamt weniger Bauraum benötigt wird.

Unter einer Reinigungsstelle kann dabei eine einem Fahrzeugsensor zugeordnete Reinigungsstelle verstanden werden. Dabei muss diese Reinigungsstelle nicht selbst Teil des Sensors sein, sondern sie kann zu diesem beabstandet angeordnet sein, so zum Beispiel eine Stelle auf einer Windschutzscheibe und dergleichen mehr. Die Reinigungsstelle kann aber auch Teil eines Fahrzeugsensors sein, etwa eine einer Kamera zugeordnete Reinigungsstelle. Eine Reinigungsstelle kann aber auch eine andere Stelle des Fahrzeugs sein, die als solche keinem Fahrzeugsensor zugeordnet ist, beispielsweise eine weitere Stelle auf der besagten Windschutzscheibe, eine Stelle auf einem Scheinwerfer und dergleichen mehr.

Unter einer Flüssigkeit bzw. Reinigungsflüssigkeit kann dabei im einfachsten Fall Wasser verstanden werden, vorteilhafterweise jedoch eine wässrige Reinigungsmittellösung, d.h. Wasser in Verbindung mit einem Reinigungsmittelzusatz. Die Reinigungsmittellösung kann dabei zudem vorteilhafterweise ein Gefrier- bzw. Frostschutzmittel enthalten, welches als solches den Gefrierpunkt der Reinigungsmittellösung herabsetzt.

Es wird dabei vorgeschlagen, den Verteiler drehbar verstellbar bzw. rotatorisch antreibbar und dabei vorzugsweise rein drehbar verstellbar bzw. rein rotatorisch antreibbar auszubilden.

Es wird zudem vorgeschlagen, den Verteiler gegenüber dem Gehäuse dichtungsfrei auszuführen.

Zur weiteren Veranschaulichung des Wasserverteilungsmechanismus, des Flüssigkeitsablaufs zu den einzelnen Reinigungsstellen sowie des Flüssigkeitsrücklaufs zum Tank wird an dieser Stelle ausdrücklich auf die deutsche Patentanmeldung mit dem Anmeldeaktenzeichen DE 10 2021 208 930.5 verwiesen, in welcher der Wasserverteilungsmechanismus der Verteilungseinrichtung detailliert und konstruktiv beschrieben ist. Der darin beschriebene Wasserverteilungsmechanismus bzw. die darin beschriebene Verteilungseinrichtung werden hiermit auch zum Offenbarungsgehalt dieser Beschreibung gemacht. Es wird dabei auf die verschiedenen Flüssigkeitsaufnahme- und Flüssigkeitsführungsmittel am und/oder im Verteiler und im Gehäuse der Verteilungseinrichtung verwiesen, welche als solche die besagte Wasserverteilung, den besagten Flüssigkeitsablauf sowie den besagten Flüssigkeitsrücklauf ermöglichen.

Es wird ferner ein Flüssigkeitsverteilungsaktuator vorgeschlagen, welcher eine Verteilungseinrichtung bzw. Distributionseinrichtung der zuvor beschriebenen Art sowie einen Elektromotor zum Antrieb des Verteilers - insbesondere drehbaren bzw. drehbar verstellbaren Verteilers - der Verteilungseinrichtung umfasst.

Der Aktuator kann dabei zudem eine Steuerungseinheit als integralen Bestandteil innerhalb eines Gehäuseabschnitts des Aktuators zur Ansteuerung zumindest des Elektromotors umfassen.

Dabei kann die Steuerungseinheit am elektrisch-anschlussseitigen Ende des Aktuators angeordnet sein. Dabei wird vorgeschlagen, die Steuerungseinheit und den Elektromotor in einem gemeinsamen Gehäuseabschnitt des Aktuators anzuordnen.

Die Steuerungseinheit kann dabei zudem zur Steuerung einer zugeordneten Flüssigkeitsförderpumpe ausgebildet sein, welche als solche mit dem Aktuator fluidisch verbunden ist.

Es wird ferner eine Reinigungsvorrichtung bzw. ein Reinigungssystem für ein Fahrzeug zur Reinigung einer Vielzahl von Reinigungsstellen am Fahrzeug vorgeschlagen, wobei die Reinigungsvorrichtung bzw. das Reinigungssystem zumindest einen Flüssigkeitsverteilungsaktuator der zuvor beschriebenen Art umfasst.

Darüber hinaus wird auch ein Fahrzeug mit einer Reinigungsvorrichtung der zuvor beschriebenen Art vorgeschlagen.

Unter einem Fahrzeug ist dabei jede Art von Fahrzeug zu verstehen, welches entweder verbrennungsmotorisch und/oder elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Des Weiteren wird ein Verfahren zum Betrieb der zuvor beschriebenen Reinigungsvorrichtung vorgeschlagen.

Dabei wird zur Erzeugung eines definierten hydraulischen Druckzustands in der Reinigungsvorrichtung der Verteiler in die Bypassposition oder in die Absperrposition verfahren bzw. verstellt, wobei in der jeweiligen Position mittels der Flüssigkeitsförderpumpe bzw. Förderpumpe bei einer festlegbaren Pumpenreferenzdrehzahl Flüssigkeit in die Verteilungseinrichtung gefördert wird.

In der Bypassposition, in welcher der Verteiler den besagten Bypass ausbildet, wird ein erstes, minimales Druckniveau in der Reinigungsvorrichtung erzeugt, wohingegen in der Absperrposition ein zweites, maximales Druckniveau in der Reinigungsvorrichtung erzeugt wird.

In diesen beiden Referenzpositionen (Bypassposition; Absperrposition) wird der jeweilige Druckzustand erfasst und zu Diagnosezwecken in einem Speicher eines Steuergerätes als Referenzwert für einen zugeordneten Fehlerfall abgelegt.

Dabei wird der Verteiler zuerst in die Bypassposition und danach in die Absperrposition oder umgekehrt verfahren bzw. verstellt.

Es wird dabei vorgeschlagen, dass ein drehbar verstellbar ausgebildeter Verteiler verstellt bzw. verdreht wird. Dabei handelt es sich vorzugsweise um einen rein drehbar verstellbar ausgebildeten bzw. um einen rein rotatorisch wirkenden Verteiler.

Es wird dabei ferner vorgeschlagen, dass das Verfahren in definierten Zeitintervallen initiiert bzw. ausgeführt wird, um die besagten Referenzwerte zu aktualisieren.

Die beiden Druckzustände können dabei mittels eines dedizierten Drucksensors stromabwärts der Förderpumpe und/oder über die Förderpumpe selbst - d.h. sensorlos - erfasst werden, indem der Förderpumpenstrom und/oder die Förderpumpenspannung abgegriffen wird/werden, die zum besagten Druckzustand korrelieren.

Das Verfahren kann dabei zweckmäßigerweise bei einem ausgeschalteten und / oder abgestellten Fahrzeug ausgeführt werden.

Im Weiteren wird die Erfindung unter Bezugnahme auf eine einzige schematische Figurendarstellung im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigt:

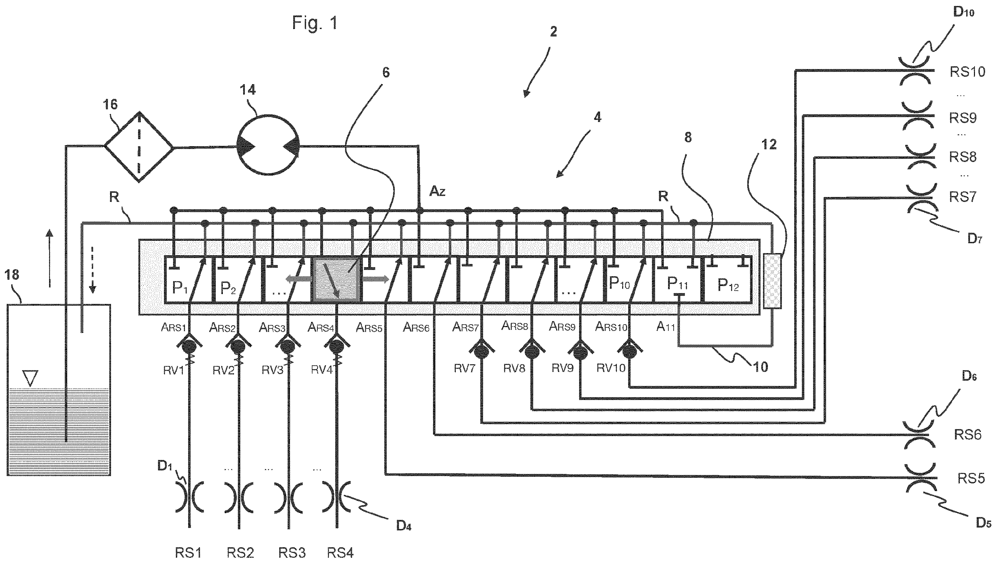

- Fig. 1: ein hydraulisches Schaltbild einer Reinigungsvorrichtung mit einem vorgeschlagenen Wasserverteilungsmechanismus.

Die in Fig. 1 dargestellte Reinigungsvorrichtung 2 stellt dabei auf eine Weiterentwicklung des in der deutschen Patentanmeldung mit dem Anmeldeaktenzeichen DE 10 2021 208 930.5 beschriebenen Wasserverteilungsmechanismus ab.

Im Einzelnen beschreibt die Fig. 1 eine Reinigungsvorrichtung 2 für ein Fahrzeug zur Reinigung einer Vielzahl von Reinigungsstellen RS1, ..., RS10 am Fahrzeug.

Die Reinigungsvorrichtung 2 umfasst dabei einen Flüssigkeitsverteilungsaktuator mit einer Verteilungseinrichtung 4 sowie einem - hier nicht dargestellten - Elektromotor zum Antrieb eines rein drehbar verstellbaren Verteilers 6 der Verteilungseinrichtung 4.

Die Verteilungseinrichtung 4 versorgt dabei die einzelnen Reinigungsstellen RS1, ..., RS10 des Fahrzeugs mit einer druckbeaufschlagten Flüssigkeit. Die Verteilungseinrichtung 4 definiert dabei einzelne Positionen P₁, ..., P₁₀, P₁₁, P₁₂, in welche der Verteiler 6 wahlweise relativ zu einem Gehäuse 8, in welchem er angeordnet und rein rotatorisch antreibbar ist, drehbar verstellbar ist. Der Verteiler 6 ist dabei gegenüber dem Gehäuse 8 dichtungsfrei ausgeführt. Daher ist die Verteilungseinrichtung 4 für einen Flüssigkeitsrücklauf - über eine Rücklaufleitung R - in den Tank 18 ausgebildet, aus welchem die Flüssigkeit mittels einer Förderpumpe 14 - und zweckmäßigerweise über einen Filter 16 - förderbar ist. Die Förderpumpe 14 kann dabei aus Platz- bzw. Bauraumgründen an einer beliebigen Stelle am Fahrzeug angeordnet sein. Alternativ dazu kann die Förderpumpe 14 auch eine zusammenhängende Einheit mit dem Gehäuse 8 ausbilden, sofern die Platz- bzw. Bauraumverhältnisse am Fahrzeug dies ermöglichen.

Der Verteiler 6 verbindet in den einzelnen Verteilungspositionen P₁, ..., P₁₀ einen einzigen flüssigkeitsdruckbeaufschlagten Zulaufanschluss A_{Z} der Verteilungseinrichtung 4 mit einem von mehreren Ablaufanschlüssen A_{RS1} bis A_{RS10} der Verteilungseinrichtung 4 fluidisch, wobei die einzelnen Ablaufanschlüsse A_{RS1} bis A_{RS10} über eine zugeordnete Leitung mit einer zugeordneten Düse D₁, ..., D₁₀ fluidisch verbunden sind.

Die Ablaufanschlüsse A_{RS1}, A_{RS2}, A_{RS3}, A_{RS4} sowie A_{RS7}, A_{RS8}, A_{RS9}, A_{RS10} sind dabei jeweils zusätzlich mit einem Rückschlagventil RV1, RV2, RV3, RV4, RV7, RV8 RV9, RV10 versehen, um eine Entleerung des Gehäuses 8 zu unterbinden.

Die zu den Düsen D₁, ..., D₄ führenden Leitungen befinden sich dabei beispielshaft unterhalb des Niveaus des Tanks 18, so dass die sich im Gehäuse 8 bzw. die sich in den jeweiligen Leitungen vor dem jeweiligen Rückschlagventil befindende Flüssigkeit nicht über die zugeordneten Leitungen und Düsen D₁, ..., D₄ in die Umgebung abfließen kann (Siphon Effekt). Die Rückschlagventile RV1, RV2, RV3, RV4 sind zudem mit je einer Feder vorgespannt. Die Rückschlagventile RV1, RV2, RV3, RV4 unterbinden somit einen unerwünschten Flüssigkeitsabfluss in die Umgebung der Reinigungsvorrichtung 2.

Die zu den Düsen D₇, ..., D₁₀ führenden Leitungen hingegen befinden sich dabei beispielshaft oberhalb des Niveaus des Tanks 18. Die Rückschlagventile RV7, RV8 RV9, RV10 verhindern somit, dass die Flüssigkeit in diesen Leitungen bedingt durch die Schwerkraft in das Gehäuse 8 zurückfließen und dadurch auch die Flüssigkeit im Gehäuse 8 über die Rücklaufleitung R in den Tank 18 treiben kann. Die Rückschlagventile RV7, RV8, RV9, RV10 unterbinden somit in den zugeordneten Leitungen einen unerwünschten Flüssigkeitsrückfluss in das Gehäuse 8.

Im Vergleich dazu bedürfen die zu den Düsen D₅, D₆ führenden Leitungen beispielhaft keiner solch fluidischen Absicherung bzw. Absperrung.

An dieser Stelle wird ausdrücklich erneut auf die deutsche Patentanmeldung mit dem Anmeldeaktenzeichen DE 10 2021 208 930.5 verwiesen, in welcher der elektromotorisch betriebene Flüssigkeitsverteilungsaktuator und dessen Wasserverteilungsmechanismus detailliert und zudem konstruktiv beschrieben sind, welche hiermit zudem ausdrücklich zum Offenbarungsgehalt dieser Figurenbeschreibung gemacht werden.

Aber im Unterschied zu der Patentanmeldung DE 10 2021 208 930.5 ist die hier beschriebene Verteilungseinrichtung 4 derart abgeändert bzw. weiterentwickelt, als dass sie zusätzlich eine Bypassposition P₁₁ sowie eine Absperrposition P₁₂ umfasst.

In der Bypassposition P₁₁ bildet der Verteiler 6 einen Bypass aus zur Unterbindung eines Ablaufs der Flüssigkeit hin zu einer der Reinigungsstellen RS1, ..., RS10 und zur Rückführung der Flüssigkeit zum Tank 18. Dabei läuft die Flüssigkeit über den Ablaufanschluss A₁₁ in die Leitung 10 ab, die ihrerseits in die Rücklaufleitung R zum Tank 18 übergeht bzw. in diese mündet. Alternativ dazu ließe sich Leitung 10 auch unter Umgehung der Rücklaufleitung R direkt bis in den Tank 18 führen.

In der Absperrposition P₁₂ hingegen sind sowohl der Ablauf als auch die Rückführung unterbunden.

In einer Ausführungsform mündet die Leitung 10 in eine als UV-Bestrahlungseinheit ausgebildete Vorrichtung 12, welche der Reinigung der Flüssigkeit bzw. der Befreiung der Flüssigkeit von Bakterien dient und welche ebenfalls wahl- und bedarfsweise aktivierbar ist.

In einer weiteren Ausführungsform mündet die Leitung 10 in eine als Wärmetauscher ausgebildete Vorrichtung 12, welche der Erwärmung der Flüssigkeit dient und welche wahl- und bedarfsweise aktivierbar sein kann.

In einer weiteren Ausführungsform durchströmt die Flüssigkeit sowohl eine solche UV-Bestrahlungseinheit als auch einen solchen Wärmetauscher.

Sowohl die UV-Bestrahlungseinheit als auch der Wärmetauscher können dabei den jeweiligen Platz- bzw. Bauraumverhältnissen in einem Fahrzeug nach an einer entsprechend günstigen Stelle der Reinigungsvorrichtung angeordnet sein.

Im Folgenden wird ein Verfahren zum Betrieb der zuvor beschriebenen Reinigungsvorrichtung beschrieben.

Zur Erzeugung eines definierten hydraulischen Druckzustands in der Reinigungsvorrichtung 2 wird der Verteiler 6 zuerst in die Bypassposition P₁₁ und danach in die Absperrposition P₁₂ oder umgekehrt verdreht bzw. verstellt, wobei in der jeweiligen Position P₁₁, P₁₂ mittels der Förderpumpe 14 bei einer festlegbaren Pumpenreferenzdrehzahl n_{ref} Flüssigkeit in die Verteilungseinrichtung 4 gefördert wird.

In der Bypassposition P₁₁, in welcher der Verteiler 6 den besagten Bypass ausbildet, wird ein erstes, minimales Druckniveau pmin in der Reinigungsvorrichtung 2 erzeugt, wohingegen in der Absperrposition P₁₂ ein zweites, maximales Druckniveau pmax in der Reinigungsvorrichtung 2 erzeugt wird.

In beiden Positionen wird der jeweilige Druckzustand erfasst und zu Diagnosezwecken in einem Speicher eines Steuergerätes als Referenzwert - für pmin bzw. pmax bezogen auf n_{ref} - abgelegt.

Das maximale Druckniveau pmax - hervorgerufen durch die Absperrposition P₁₂ - korrespondiert dabei zu einem möglichen ersten Fehlerfall in Form einer blockierten bzw. verstopften Düse D1, ..., D10, wohingegen das minimale Druckniveau pmin - hervorgerufen durch die Bypassposition P₁₁ - zu einem möglichen zweiten Fehlerfall in Form einer offenen Leitung, etwa in Form einer im Bereich einer der Reinigungsstellen RS1, ..., RS10 offenen Leitung korrespondiert, z.B. infolge einer abgefallenen oder abgerissenen Düse D1, ..., D10.

Dabei wird vorgeschlagen, dieses Verfahren zur Ermittlung der Referenzwerte bei einem ausgeschalteten und/oder abgestellten Fahrzeug zu initiieren und aus- bzw. durchzuführen, etwa während eines Werkstattaufenthaltes. Dabei wird ferner vorgeschlagen, diese Referenzwerte in definierten Zeitintervallen immer wieder erneut zu erfassen und deren Hinterlegung im Steuergerät zu aktualisieren, zumal eine solche Reinigungsvorrichtung 2 ein gewisses Alterungsverhalten aufweisen kann, welches sich auf diese Referenzwerte auswirken kann.

Die beiden Druckzustände pmin, pmax können dabei mittels eines dedizierten Drucksensors und/oder über die Förderpumpe selbst, d.h. sensorlos erfasst werden, etwa über den abgreifbaren Förderpumpenstrom I und/oder die abgreifbare Förderpumpenspannung U.

Somit lassen sich die besagten beiden Fehlerfälle jederzeit während eines Betriebs des Fahrzeugs bzw. während eines Fahrzyklus durch einen Vergleich von aktuell erfassbaren bzw. erfassten Druckzuständen in der Reinigungsvorrichtung 2 mit den beiden im Steuergerät hinterlegten Referenzwerten erkennen. Auch die aktuellen Druckzustände sind dabei in analoger Weiser mittels des dedizierten Drucksensors und/oder sensorlos über die Förderpumpe selbst erfassbar.

Die Bypassposition P₁₁ kann zudem vorteilhafterweise zur Reinigung der Flüssigkeit verwendet werden, indem die Flüssigkeit über eine definierbare Zeit bzw. Zeitspanne in einem Kreislauf umgewälzt und dabei, wie zuvor beschrieben, an einer definierbaren Stelle der Reinigungsvorrichtung 2 mit UV-Licht zur Befreiung von Bakterien bestrahlt wird.

Zusätzlich oder alternativ dazu kann die Bypassposition P₁₁ auch vorteilhafterweise zur Erwärmung der im Kreislauf umgewälzten Flüssigkeit verwendet werden, indem ein Wärmetauscher an einer definierbaren Stelle der Reinigungsvorrichtung 2 durchströmt wird.

Zur Einsparung von Kosten wird dabei vorgeschlagen, den Verteiler 6 ohne einen dedizierten Positionssensor zu verwenden, welcher die Position des Verteilers 6 relativ zum Gehäuse 8 überwacht bzw. erfasst.

Zur Initialisierung der Reinigungsvorrichtung 2 wird vielmehr vorgeschlagen, den Verteiler 6 solange von einer Position in eine andere Position - kontinuierlich oder schrittweise bzw. stufenweise - zu verdrehen, bis entweder die Bypassposition P₁₁ (pmin) oder die Absperrposition P₁₂ (pmax) eindeutig erkannt wird. Die Erkennung einer dieser beiden Positionen reicht dabei aus, um die Ausrichtung des Verteilers 6 relativ zum Gehäuse 8 eindeutig zu erkennen bzw. zu erfassen und die Reinigungsvorrichtung 2 sodann entsprechend betreiben zu können.

Unter "Initialisierung" ist dabei die Vorbereitung der Reinigungsvorrichtung 2 zu verstehen, so dass diese ihrem Verwendungszweck entsprechend in Betrieb genommen werden kann.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Verteilungseinrichtung (4) zur Versorgung einzelner Reinigungsstellen (RS1, ... , RS10) eines Fahrzeugs mit einer druckbeaufschlagten Flüssigkeit, wobei die Verteilungseinrichtung (4) einzelne Positionen (P₁, ..., P₁₀, P₁₁, P₁₂) definiert, in welche ein Verteiler (6) wahlweise relativ zu einem Gehäuse (8), in welchem er angeordnet und antreibbar ist, verstellbar ist, und zwar in:
• einzelne Verteilungspositionen (P₁, ..., P₁₀), in welchen der Verteiler (V) einen flüssigkeitsdruckbeaufschlagten Zulaufanschluss (A_{Z}) der Verteilungseinrichtung (4) mit einem von mehreren Ablaufanschlüssen (A_{RS1}, ..., A_{RS10}) der Verteilungseinrichtung (4) fluidisch verbindet, **gekennzeichnet dadurch dass**, der Verteiler (V) zusätzlich verstellbar ist in:
• eine Bypassposition (P₁₁), in welcher der Verteiler (6) einen Bypass zur Unterbindung eines Ablaufs der Flüssigkeit hin zu einer der Reinigungsstellen (RS1, ..., RS10) und zur Rückführung der Flüssigkeit zu einem Tank (18) ausbildet,
• oder eine Absperrposition (P₁₂), welche sowohl den Ablauf als auch die Rückführung unterbindet,
wobei die Verteilungseinrichtung für einen Flüssigkeitsrücklauf in den Tank (18) ausgebildet ist.

2. Verteilungseinrichtung nach Anspruch 1, wobei der Verteiler (6) drehbar verstellbar ist.

3. Verteilungseinrichtung nach Anspruch 1 oder 2, wobei der Verteiler (6) gegenüber dem Gehäuse (8) dichtungsfrei ausgeführt ist.

4. Verteilungseinrichtung nach Anspruch 1, wobei die Rückführung der Flüssigkeit über den Bypass in den Flüssigkeitsrücklauf der Verteilungseinrichtung (4) übergeht.

5. Flüssigkeitsverteilungsaktuator umfassend:
eine Verteilungseinrichtung (4) nach einem der vorhergehenden Ansprüche sowie
einen Elektromotor zum Antrieb des Verteilers (6).

6. Reinigungsvorrichtung für ein Fahrzeug zur Reinigung einer Vielzahl von Reinigungsstellen (RS1, ..., RS10) am Fahrzeug, wobei die Reinigungsvorrichtung zumindest einen Flüssigkeitsverteilungsaktuator nach Anspruch 6 umfasst.

7. Fahrzeug mit einer Reinigungsvorrichtung nach Anspruch 6.

8. Verfahren zum Betrieb einer Reinigungsvorrichtung nach Anspruch 6,
bei welchem zur Erzeugung eines definierten hydraulischen Druckzustands in der Reinigungsvorrichtung (2) der Verteiler (6) in die Bypassposition (P₁₁) oder in die Absperrposition (P₁₂) verstellt wird, wobei in der jeweiligen Position (P₁₁, P₁₂) mittels einer Förderpumpe (14) bei einer festlegbaren Pumpenreferenzdrehzahl (n_{ref}) Flüssigkeit in die Verteilungseinrichtung (4) gefördert wird,
wobei in der Bypassposition (P₁₁) ein erstes, minimales Druckniveau (pmin) in der Reinigungsvorrichtung (2) erzeugt wird und wobei in der Absperrposition (P₁₂) ein zweites, maximales Druckniveau (pmax) in der Reinigungsvorrichtung (2) erzeugt wird,
wobei die beiden Druckzustände erfasst und zu Diagnosezwecken in einem Speicher eines Steuergerätes als Referenzwerte abgelegt werden.

9. Verfahren nach Anspruch 8, wobei der Verteiler (6) zuerst in die Bypassposition (P₁₁) und danach in die Absperrposition (P₁₂) oder umgekehrt verfahren wird.

10. Verfahren nach Anspruch 8 oder 9, wobei ein drehbar verstellbar ausgebildeter Verteiler (6) verstellt bzw. verdreht wird.

11. Verfahren nach nach einem der Ansprüche 8 bis 10, wobei das Verfahren in definierten Zeitintervallen ausgeführt wird, um die Referenzwerte zu aktualisieren.

12. Verfahren nach einem der Ansprüche 8 bis 11, wobei die beiden Druckzustände (pmin, pmax) mittels eines dedizierten Drucksensors stromabwärts der Förderpumpe (14) und/oder über die Förderpumpe selbst erfasst werden.

13. Verfahren nach einem der Ansprüche 8 bis 12, wobei das Verfahren bei einem ausgeschalteten und/oder abgestellten Fahrzeug ausgeführt wird.

## Claims

1. Distributing device (4) for supplying pressurized liquid to individual cleaning locations (RS1, ... , RS10) of a vehicle, wherein the distributing device (4) defines individual positions (P₁, ..., P₁₀, P₁₁, P₁₂) into which a distributor (6) is selectively adjustable relative to a housing (8) in which said distributor is arranged and drivable, specifically into:
• individual distributing positions (P₁, ..., P₁₀), in which the distributor (V) fluidically connects a feed connector (A_{Z}), which is subjected to liquid pressure, of the distributing device (4) to one of multiple discharge connectors (A_{RS1}, ..., A_{RS10}) of the distributing device (4), **characterized in that** the distributor (V) is additionally adjustable into:
• a bypass position (P₁₁), in which the distributor (6) forms a bypass for preventing a discharge of the liquid to one of the cleaning locations (RS1, ..., RS10) and for returning the liquid to a tank (18),
• or a shut-off position (P₁₂), which prevents both the discharge and the return,
wherein the distributing device is configured for a liquid return into the tank (18).

2. Distributing device according to Claim 1, wherein the distributor (6) is rotatably adjustable.

3. Distributing device according to Claim 1 or 2, wherein the distributor (6) is formed without a seal with respect to the housing (8).

4. Distributing device according to Claim 1, wherein the return of the liquid via the bypass transitions into the liquid return of the distributing device (4).

5. Liquid-distributing actuator comprising:
a distributing device (4) according to one of the preceding claims and
an electric motor for driving the distributor (6).

6. Cleaning device for a vehicle for cleaning a multiplicity of cleaning locations (RS1, ..., RS10) on the vehicle, the cleaning device comprising at least one liquid-distributing actuator according to Claim 6.

7. Vehicle having a cleaning device according to Claim 6.

8. Method for operating a cleaning device according to Claim 6,
in which method, in order to generate a defined hydraulic pressure state in the cleaning device (2), the distributor (6) is adjusted into the bypass position (P₁₁) or into the shut-off position (P₁₂), in the respective position (P₁₁, P₁₂) liquid being conveyed into the distributing device (4) by means of a conveying pump (14) at a settable pump reference rotational speed (n_{ref}),
wherein, in the bypass position (P₁₁), a first, minimum pressure level (pmin) is generated in the cleaning device (2), and in the shut-off position (P₁₂) a second, maximum pressure level (pmax) is generated in the cleaning device (2),
wherein the two pressure states are detected and stored for diagnostic purposes as reference values in a memory of a control unit.

9. Method according to Claim 8, wherein the distributor (6) is moved firstly into the bypass position (P₁₁) and subsequently into the shut-off position (P₁₂) or vice versa.

10. Method according to Claim 8 or 9, wherein a rotatably adjustable distributor (6) is adjusted or rotated.

11. Method according to one of Claims 8 to 10, wherein the method is carried out at defined time intervals in order to update the reference values.

12. Method according to one of Claims 8 to 11, wherein the two pressure states (pmin, pmax) are detected by means of a dedicated pressure sensor downstream of the conveying pump (14) and/or by means of the conveying pump itself.

13. Method according to one of Claims 8 to 12, wherein the method is carried out in a shut-down and/or parked vehicle.

## Revendications

1. Dispositif de distribution (4) pour l'alimentation en liquide sous pression de points de nettoyage individuels (RS1, ..., RS10) d'un véhicule , le dispositif de distribution (4) définissant des positions individuelles (P₁, ..., P₁₀, P₁₁, P₁₂), dans lesquelles un distributeur (6) peut être ajusté au choix par rapport à un boîtier (8), dans lequel il est disposé et peut être entraîné, à savoir dans :
• des positions de distribution individuelles (P₁, ..., P₁₀), dans lesquelles le distributeur (V) relie fluidiquement un raccord d'arrivée (Az) soumis à une pression de liquide du dispositif de distribution (4) à un de plusieurs raccords de sortie (A_{RS1}, ..., A_{RS10}) du dispositif de distribution (4),
**caractérisé en ce que** le distributeur (V) peut être ajusté en supplément dans :
• une position de dérivation (P₁₁), dans laquelle le distributeur (6) forme une dérivation pour empêcher le liquide de sortir vers un des points de nettoyage (RS1, ..., RS10) et pour renvoyer le liquide vers un réservoir (18),
• ou une position d'arrêt (P12), qui empêche à la fois la sortie et le retour,
le dispositif de distribution étant formé pour un retour de liquide dans le réservoir (18).

2. Dispositif de distribution selon la revendication 1, le distributeur (6) pouvant être ajusté de manière à pouvoir tourner.

3. Dispositif de distribution selon la revendication 1 ou 2, le distributeur (6) étant réalisé sans étanchéité par rapport au boîtier (8).

4. Dispositif de distribution selon la revendication 1, le retour du liquide passant dans le conduit de retour du dispositif de distribution (4) par la dérivation.

5. Actionneur de distribution de liquide comprenant :
un dispositif de distribution (4) selon l'une des revendications précédentes et
un moteur électrique pour entraîner le distributeur (6).

6. Dispositif de nettoyage pour un véhicule pour nettoyer une pluralité de points de nettoyage (RS1, ..., RS10) sur le véhicule, le dispositif de nettoyage comprenant au moins un actionneur de distribution de liquide selon la revendication 6.

7. Véhicule avec un dispositif de nettoyage selon la revendication 6.

8. Procédé de fonctionnement d'un dispositif de nettoyage selon la revendication 6,
dans lequel, pour la génération d'un état de pression hydraulique défini dans le dispositif de nettoyage (2), le distributeur (6) est ajusté dans la position de dérivation (P₁₁) ou dans la position d'arrêt (P₁₂), du liquide étant refoulé dans le dispositif de distribution (4) au moyen d'une pompe de refoulement (14) à une vitesse de rotation de référence de pompe (n_{ref}) pouvant être fixée dans la position respective (P₁₁, P₁₂),
un premier niveau de pression minimum (pmin) étant généré dans le dispositif de nettoyage (2) dans la position de dérivation (P₁₁) et un deuxième niveau de pression maximum (pmax) étant généré dans le dispositif de nettoyage (2) dans la position d'arrêt (P₁₂),
les deux états de pression étant détectés et déposés dans une mémoire d'un appareil de commande en tant que valeurs de référence à des fins de diagnostic.

9. Procédé selon la revendication 8, le distributeur (6) étant d'abord déplacé dans la position de dérivation (P₁₁) puis dans la position d'arrêt (P₁₂) ou inversement.

10. Procédé selon la revendication 8 ou 9, un distributeur (6) ajustable de manière à pouvoir tourner étant ajusté ou tourné.

11. Procédé selon l'une des revendications 8 à 10, le procédé étant réalisé à des intervalles de temps définis pour mettre à jour les valeurs de référence.

12. Procédé selon l'une des revendications 8 à 11, les deux états de pression (pmin, pmax) étant détectés au moyen d'un capteur de pression dédié en aval de la pompe de refoulement (14) et/ou par la pompe de refoulement elle-même.

13. Procédé selon l'une des revendications 8 à 12, le procédé étant réalisé dans un véhicule arrêté et/ou stationné.
